# EUROPEAN PATENT SPECIFICATION

(11) **EP 4 524 875 B1**
(45) Date of publication and mention of the grant of the patent: **29.04.2026**
(21) Application number: 24221052.4
(22) Date of filing: 18.12.2024
(51) Int. Cl.: G06T 11/60, G06T 3/00, G06T 7/11, G06T 7/194

(54) **METHOD AND APPARATUS FOR IMAGE PROCESSING, ELECTRONIC DEVICE AND STORAGE MEDIUM**
VERFAHREN UND VORRICHTUNG ZUR BILDVERARBEITUNG, ELEKTRONISCHE VORRICHTUNG UND SPEICHERMEDIUM
PROCÉDÉ ET APPAREIL DE TRAITEMENT D'IMAGE, DISPOSITIF ÉLECTRONIQUE ET SUPPORT D'INFORMATIONS

(30) Priority: 22.05.2024 CN 202410642778
(43) Date of publication of application: 19.03.2025
(73) Proprietor: Beijing Baidu Netcom Science Technology Co., Ltd., Beijing 100085 (CN)
(72) Inventor: DONG, Shiyang, Beijing 100085 (CN)
(74) Representative: Maiwald GmbH

(56) References cited:
- US-A1- 2022 122 344
- VIDYA SETLUR ET AL: "Automatic image retargeting", PROCEEDINGS OF THE 4TH INTERNATIONAL CONFERENCE ON MOBILE AND UBIQUITOUS MULTIMEDIA , MUM '05, 1 January 2005 (2005-01-01), New York, New York, USA, pages 59, XP055025181, ISBN: 978-0-47-310658-4, DOI: 10.1145/1149488.1149499

## Description

### TECHNICAL FIELD

The invention relates to the field of computer technology, in particular to an artificial intelligence field such as computer vision, and in particular to a method and an apparatus for image processing, a storage medium and a computer program product.

### BACKGROUND

With the development of a computer technology, some applications are capable of creating various types of photo stories based on photos of the user. A photo story is generally a collection of associated images. In order to improve the interest and freshness of the photo story, the photos in the collection may be created or processed before delivering the photo collection.

US 2022/122344 A1 discloses enhancing images by detecting faces and cropping or adjusting the image so that the face region occupies a larger portion of the final image

### SUMMARY

The invention provides a method and an apparatus for image processing, an electronic device and a storage medium.

The invention is set forth in the appending claims.

It should be understood that the description in this section is not intended to identify key or important features of embodiments of the invention, nor is it intended to limit the scope of the invention. Other features of the invention will be readily understood by the following specification.

### BRIEF DESCRIPTION OF THE DRAWINGS

The accompanying drawings are used for a better understanding of the invention and do not constitute a limitation of the invention.
FIG. 1 is a schematic flowchart illustrating a method for image processing provided in an embodiment of the invention.
FIG. 2 is a schematic diagram illustrating a first image to be processed provided in an embodiment of the invention.
FIG. 3 is a schematic diagram illustrating a target image generated based on FIG. 2 provided in an embodiment of the invention.
FIG. 4 is a schematic flowchart illustrating a method for image processing provided in another embodiment of the invention.
FIG. 5 is a schematic diagram illustrating a cropping method of the image to be processed provided in an embodiment of the invention.
FIG. 6 is a schematic diagram illustrating another cropping method of the image to be processed provided in an embodiment of the invention.
FIG. 7 is a schematic diagram illustrating a second image to be processed provided in an embodiment of the invention.
FIG. 8 is a schematic diagram illustrating a target image generated based on FIG. 7 provided in an embodiment of the invention.
FIG. 9 is a schematic diagram illustrating a third image to be processed provided in an embodiment of the invention.
FIG. 10 is a schematic diagram illustrating a target image generated based on FIG. 9 provided in an embodiment of the invention.
FIG. 11 is a block diagram illustrating an apparatus for image processing provided in an embodiment of the invention.
FIG. 12 is a block diagram illustrating an electronic device used to implement the method for image processing provided in an embodiment of the invention.

### DETAILED DESCRIPTION

Exemplary embodiments of the invention are described hereinafter in conjunction with the accompanying drawings, which include various details of the embodiments of the invention to facilitate understanding, and should be considered merely exemplary. Therefore, those of ordinary skill in the art should recognize that various changes and modifications may be made to the embodiments described herein without departing from the scope of the invention. Similarly, descriptions of well-known features and structures are omitted in the following description for clarity and conciseness.

A method and an apparatus for image processing, an electronic device and a storage medium in embodiments of the invention are described below with reference to the accompanying drawings.

In some embodiments, in order to enrich the style of the image, an image with the effect that a portrait appears to jump out of a picture frame may be obtained by processing the image. The image may be referred to as a portrait breaking image or a portrait highlighting image and the like.

In some embodiments, a portrait breaking image may be obtained by manually using an application program having an image processing function. However, this method is cumbersome, complex, inefficient, and time-consuming.

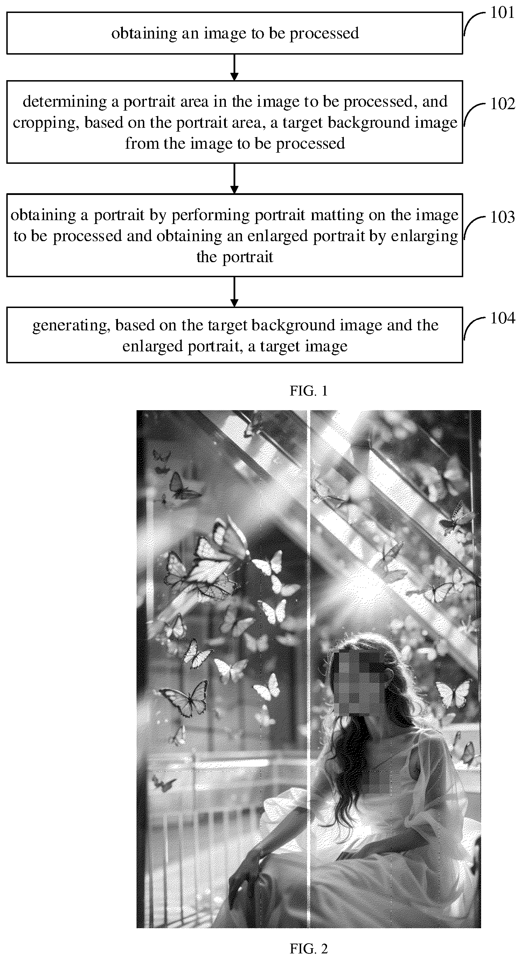

FIG. 1 is a schematic flowchart illustrating a method for image processing provided in an embodiment of the invention.

The method for image processing in embodiments of the invention may be performed by an apparatus for image processing in embodiments of the invention. The apparatus may be configured in an electronic device.

The electronic device may be any device with computing capabilities, such as a personal computer (PC), a mobile terminal, a server, and the like. The mobile terminal may be, for example, a vehicle-mounted device, a mobile phone, a tablet, a personal digital assistant, a wearable device, or other hardware devices with various operating systems, touch screens, and/or displays.

As shown in FIG. 1, the method for image processing includes the following steps 101 to 104.

At step 101, an image to be processed is obtained.

In the invention, the image to be processed may be an image including a portrait. Exemplarily, the image to be processed may be an image obtained by photographing, or an image filtered from a plurality of images provided by a user, or an image extracted from a video, and the like, or an image obtained by other means, which is not limited therein.

Exemplarily, a candidate image may be obtained, and it is determined whether the candidate image satisfies a preset condition. If the candidate image satisfies the preset condition, the candidate image is determined to be the image to be processed. There may be one or more candidate images, and which is not limited therein. If there are a plurality of candidate images, it may be determined whether each candidate image satisfies the preset condition.

Exemplarily, the preset condition may include, but are not limited to: a number of portraits included being a preset number, a portrait included being an area image of a partial human body, a photographing label being a preset label, or the candidate image being an original image.

Exemplarily, the preset number may be one, such as the image to be processed includes one portrait. For example, face recognition may be performed on the image to be processed, and a number of portraits in the image to be processed may be determined by a face recognition result.

Exemplarily, the included portrait is an area image of a partial human body, i.e., the included portrait is not a full-body photograph. For example, a portrait segmentation operator may be used to process the image to be processed and it is determined whether the portrait is attached to an edge or not based on a segmentation result. If the portrait is not attached to an edge, the portrait may be determined as a full-body photograph.

Exemplarily, the photographing label may be configured to characterize a photographing of the image, such as selfie, others shot, tripod shot, and the like. The preset label may be others shot, tripod shot, and the like. For example, the image to be processed is not a selfie.

Exemplarily, the image to be processed is an original image and not a stitched image.

For example, the image to be processed may simultaneously satisfy preset conditions, including: only one portrait, the portrait being not full-body, not a selfie, not a stitched picture, and the like.

Thus, an image that is suitable for making a portrait breaking image may be obtained by filtering the candidate images based on the preset condition, so as to improve the portrait breaking effect of the target image obtained finally.

In order to ensure that the portrait is broken smoothly, a background erased portrait may be obtained by performing background erasing on the candidate image, and a matting portrait may be obtained by performing portrait matting on the candidate image.

The background erased portrait may be understood as a portrait obtained by performing background erasing on the candidate image. Exemplarily, the background erased portrait may be obtained by processing the candidate image using a background erasing operator.

The matting portrait may be understood as a portrait obtained by performing the portrait matting on the candidate image. For example, the matting portrait may be obtained by processing the candidate image using a portrait matting operator.

The portrait obtained by performing the portrait matting on the candidate image may include a background similar to a depth of a person. For example, a bag carried by the person in the candidate image. The portrait obtained by performing the background erasing may include the bag, and the portrait obtained by performing the portrait matting may include only the person but not the bag. In order to determine whether the person and a background in the candidate image are clear hierarchical or not, a ratio of different pixel points in the background erased portrait and the matting portrait to pixel points of the matting portrait is determined by comparing the background erased portrait with the matting portrait. If the ratio is less than a third threshold, the background and the person in the candidate image are clear hierarchical.

Exemplarily, the image to be processed may simultaneously satisfy the preset conditions, including: only one portrait, the portrait is not full-body, not a selfie, not a stitched picture, the ratio of different pixel points in the background erased portrait and the matting portrait to pixel points of the matting portrait being less than the third threshold, and the like. For example, the third threshold is 0.25.

It should be noted that the third threshold may be determined according to an actual need and is not limited therein.

Thus, by performing the background erasing and the portrait matting on the candidate image, and filtering the candidate image according to a comparison result between processing results, the image to be processed may be ensured to be an image with a clear hierarchy of the person and the background, so as to improve the portrait breaking effect of the target image obtained finally.

At step 102, a portrait area in the image to be processed is determined, and a target background image is cropped from the image to be processed based on the portrait area.

In the invention, the image to be processed may be detected to determine a position of the portrait in the image to be processed. An area occupied by the portrait in the image to be processed may be determined based on the portrait position, i.e., the portrait area may be determined.

In the invention, the target background image cropped from the image to be processed based on the portrait area may include part of the portrait area or all the portrait area, which is not limited herein.

Exemplarily, the target background image may be a square. A side length of the square may be equal to a width or a height of the image to be processed. For example, if the width of the image to be processed is smaller than the height, the side length of the square may be equal to the width of the image to be processed. If the height of the image to be processed is smaller than the width, the side length of the square may be equal to the height of the image to be processed.

Exemplarily, the target background image may be a rectangle. A short side of the rectangle may be equal to a width or a height of the image to be processed. For example, if the width of the image to be processed is smaller than the height, a side length of the short side of the rectangle may be equal to the width of the image to be processed, and a side length of a long side of the rectangle is smaller than the height of the image to be processed. If the height of the image to be processed is smaller than the width, the side length of the short side of the rectangle may be equal to the height of the image to be processed, and the side length of the long side of the rectangle may be smaller than the width of the image to be processed.

At step 103, a portrait is obtained by performing portrait matting on the image to be processed and an enlarged portrait is obtained by enlarging the portrait.

Exemplarily, a portrait may be obtained by performing portrait matting on the image to be processed using the background erasing operator. Exemplarily, a portrait may be obtained by performing portrait matting on the image to be processed using the portrait segmentation operator. Exemplarily, a portrait output by a portrait segmentation model may be obtained by performing portrait matting on the image to be processed using a pre-trained portrait segmentation model.

In the invention, a height of the enlarged portrait may be greater than a height of the target background image to achieve a portrait overflow effect. For example, the height of the target background image is 0.9 times the height of the enlarged portrait. Further, the width of the enlarged portrait is smaller than the width of the target background image to avoid overflow of the portrait in the width, resulting in portrait cropping.

It should be noted that in the invention, the height of the target background image may be a preset multiple of the height of the enlarged portrait, and the preset multiple may be determined according to an actual need, which is not limited therein.

At step 104, a target image is generated based on the target background image and the enlarged portrait.

In the invention, a processed background image may be obtained by adding a preset number of transparent lines horizontally and vertically to the target background image. The target image may be obtained by pasting the processed background image in a background image with a preset width-to-height ratio and pasting the enlarged portrait along a bottom edge of the portrait in the processed background image. Thus, after adding a preset number of transparent lines horizontally and vertically to the target background image, the enlarged portrait is pasted, and the image effect may be further enriched while ensuring that the target image has the portrait breaking effect.

Exemplarily, the preset number may be 2. That is, two horizontal equally spaced transparent lines and two vertical equally spaced transparent lines may be added to the target background image, so that the processed background image has a nine-grid effect (the two horizontal equally spaced transparent lines and two vertical equally spaced transparent lines cause the target background picture to be divided into nine grids with the same size). Then the finally obtained target image has the effect that the portrait appears to jump out of the nine-grid frame, and the target image may be referred to as a nine-grid portrait breaking image.

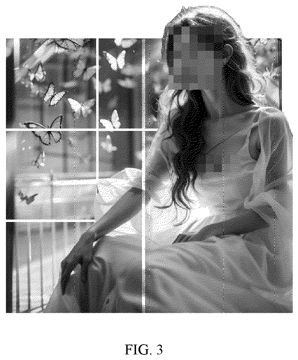

For example, FIG. 2 is an image to be processed, and FIG. 3 may be obtained by processing FIG. 2 using the method for image processing described above.

It should be noted that the preset number as 2 is only an example and should not be regarded as a limitation of the invention.

Exemplarily, the preset width-to-height ratio may be four to three or three to two, or the value thereof, which is not limited therein.

Exemplarily, a color of the background image with the preset width-to-height ratio may be white or black, or other colors, which is not limited therein.

Optionally, the target image may be obtained by pasting the target background image in the background image with the preset width-to-height ratio and pasting the enlarged portrait along a bottom edge of the portrait in the processed background image.

In embodiments of the invention, the portrait area in the image to be processed is determined, the target background image is cropped, based on the portrait area, from the image to be processed, the portrait is obtained by performing portrait matting on the image to be processed and the portrait is enlarged. Since the height of the enlarged portrait is greater than the height of the target background image, the target image with the portrait breaking effect may be generated based on the target background image and the enlarged portrait. Thus, the target background image may be automatically cropped based on the portrait area in the image to be processed, and the portrait breaking effect may be realized by enlarging the portrait, which improves the efficiency of the generation of the portrait breaking image.

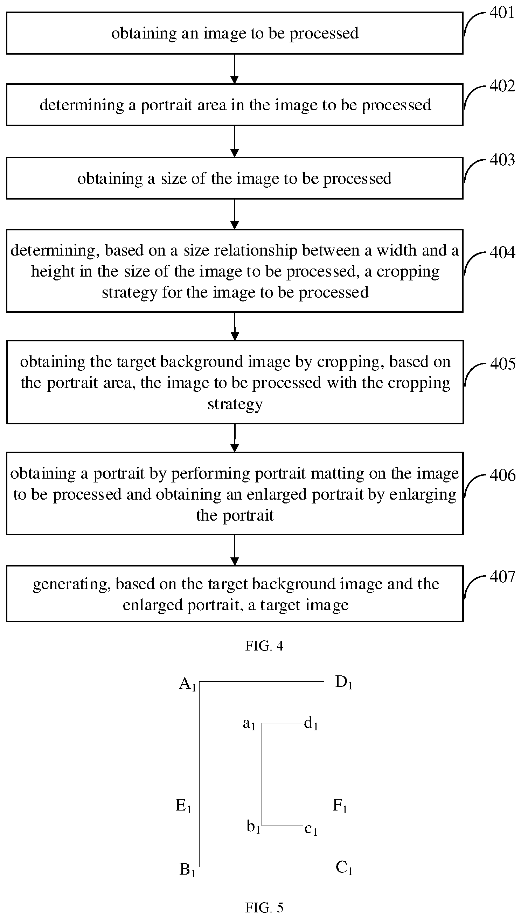

FIG. 4 is a schematic flowchart illustrating a method for image processing provided in another embodiment of the invention.

As shown in FIG. 4, the method for image processing includes the following steps 401 to 407.

At step 401, an image to be processed is obtained.

In the invention, the step 401 may be realized in any implementation of the embodiments of the invention, which is not be repeated herein.

At step 402, a portrait area in the image to be processed is determined.

In the invention, the step 402 may be realized in any implementation of the embodiments of the invention, which is not be repeated herein.

At step 403, a size of the image to be processed is obtained.

In the invention, attribute information of the image to be processed may be obtained, and the size of the image to be processed may be obtained from the attribute information. The size include a width and a height.

At step 404, a cropping strategy for the image to be processed is determined based on a size relationship between a width and a height in the size of the image to be processed.

In the invention, size relationships between the width and the height are different, and corresponding cropping strategies are different. That is, there is a cropping strategy corresponding to the width being smaller than the height, and there is also a cropping strategy corresponding to the width being larger than the height.

Exemplarily, if the width of the image to be processed is smaller than the height, i.e., the image to be processed is a vertical image, the cropping strategy may include cropping the image to be processed from bottom to top or from top to bottom. Exemplarily, if the height of the image to be processed is smaller than the width, i.e., the image to be processed is a horizontal image, the cropping strategy may include cropping the image to be processed from left to right or from right to left.

At step 405, the target background image is obtained by using the cropping strategy to crop, based on the portrait area, the image to be processed.

In the invention, if the width of the image to be processed is smaller than the height, i.e., the image to be processed is the vertical image, a first area to be cropped may be determined in the image to be processed in a bottom-to-top order. If the first area to be cropped includes all of the portrait area, i.e., includes a complete portrait area, the target background image is obtained by cropping the first area to be cropped.

If the first area to be cropped does not include all of the portrait area, i.e., does not include the complete portrait area, a second area to be cropped may be determined in the image to be processed in a top-to-bottom order. If a proportion of a portrait area included in the second area to be cropped in an entire portrait area is greater than a first threshold, the target background image is obtained by cropping the second area to be cropped.

Exemplarily, the width of the first area to be cropped is the same as the width of the image to be processed, and the width of the second area to be cropped is the same as the width of the image to be processed, and then it is determined that the width of the target background image is also the same as the width of the image to be processed.

Exemplarily, if the width of the image to be processed is smaller than the height, a rectangle may be used to crop the image to be processed. An area occupied by the rectangle in the image to be processed may be used as the first area to be cropped or the second area to be cropped. Exemplarily, the rectangle may be a square, and a side length of the square is the same as the width of the image to be processed. Exemplarily, the rectangle may also be a preset rectangle with two adjacent sides having different side lengths. For example, a side length of a short side of the preset rectangle is the same as the width of the image to be processed, and a side length of a long side of the preset rectangle is smaller than a height of the image to be processed.

For example, in the case that the first threshold is 60%, and if the second area to be cropped includes a portrait area that is greater than 60% of the complete portrait area, the target background image may be obtained by cropping the second area to be cropped.

It should be noted that the first threshold may be determined according to an actual need, which is not limited therein.

Therefore, for the image to be processed with the width smaller than the height, the first area to be cropped may be determined in the bottom-to-top order. It is determined whether or not to crop the first area to be cropped based on whether or not the first area to be cropped includes a complete portrait area. If the first area to be cropped does not include the complete portrait area, a second area to be cropped may be determined in the top-to-bottom order. It is determined whether or not to crop the second area to be cropped based on whether or not the proportion of the portrait area included in the second area to be cropped in the entire portrait area is greater than a first threshold, which ensures that the portrait area included in the target background image obtained by cropping meets a requirement, and ensures that the finally obtained target image has a portrait breaking effect.

Optionally, the portrait area may first be determined whether the portrait area touches a bottom of the image to be processed, and a cropping mode of the image to be processed may be determined based on a determining result. If the portrait area does not touch the bottom of the image to be processed, then the image to be processed may be cropped in the top-to-bottom order. If the proportion of a portrait area included in an area to be cropped in the entire portrait area is greater than the first threshold, the area to be cropped may be cropped. If the portrait region touches the bottom of the image to be processed, the image to be processed may be cropped in the bottom-to-top order first, and then in the top-to-bottom order if the first area to be cropped does not include all of the portrait area. Therefore, the cropping time may be saved and the efficiency may be improved while ensuring that a cropped target background image meets the requirement.

To facilitate understanding, for the vertical image, the following is illustrated in combination with FIG. 5 as an example of using a square to crop the target background image. In FIG. 5, a rectangle A1B1C1D1 is an area of the image to be processed, and an area a1b1c1d1 is the portrait area. It is seen that the portrait area does not touch the bottom of the image to be processed, the image to be processed may be cropped in the top-to-bottom order. Since the proportion of the portrait area in a square A1E1F1D1 in the entire portrait area is greater than the first threshold, the target background image may be obtained by cropping the square A1E1F1D1.

Optionally, if the proportion of the portrait area included in the second area to be cropped in the entire portrait area is smaller than the first threshold, it may be determined that a generation of the target image is failed, and prompt information for a failure of the generation of the target image may be returned. Exemplarily, the prompt information includes a reason for the failure of the generation.

It should be noted that if the proportion of the portrait area included in the second area to be cropped in the entire portrait area is equal to the first threshold, the target background image may be obtained by cropping the second area to be cropped, or the prompt information for the failure of the generation of the target image may be returned. The specific details may be determined according to an actual need, which is not limited therein.

If the height of the image to be processed is smaller than the width, i.e., the image to be processed is the horizontal image, a preset rectangle may be slid horizontally in the image to be processed. An area occupied by the preset rectangle in the image to be processed may be determined as a third area to be cropped. If it is determined that the portrait area is located in a preset area of the third area to be cropped, the target background image is obtained by cropping the third area to be cropped.

The image to be processed contains a preset rectangle. A side of the preset rectangle is parallel to a vertical edge of the image to be processed, and a side length of the side is the same as the height of the image to be processed.

Exemplarily, the preset rectangle may be a square, and a side length of the square is the same as the height of the image to be processed.

Exemplarily, the preset rectangle may also be a rectangle with two adjacent sides having different side lengths. For example, a side length of a short side of the preset rectangle may be the same as the height of the image to be processed, and a side length of a long side of the preset rectangle may be smaller than the width of the image to be processed. For example, the side length of the long side of the preset rectangle may be the same as the height of the image to be processed.

The preset area is a left area or a right area of the third area to be cropped and a proportion of the portrait area in the third area to be cropped is less than a second threshold.

For example, in the case that the second threshold is one-third, and if the portrait area is located within a one-third range of the left area of the third area to be cropped or within a one-third range of the right area of the third area to be cropped, the target background image may be obtained by cropping the third area to be cropped.

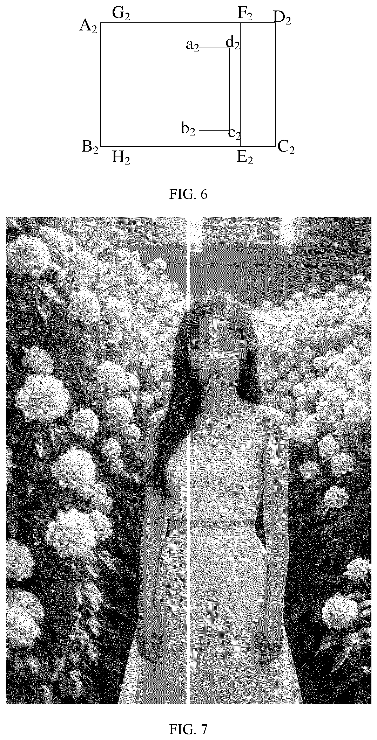

To facilitate understanding, for the horizontal image, the following is illustrated in combination with FIG. 6 as an example of cropping the target background image using a square. In FIG. 6, a rectangle A2B2C2D2 is an area of the image to be processed, and a2b2c2d2 is the portrait area. The square E2F2G2H2 may be slid horizontally within the rectangle A2B2C2D2, and when the square E2F2G2H2 is at a position shown in FIG. 6, the portrait area is located in a preset area of the square E2F2G2H2, and the target background image may be obtained by cropping the square E2F2G2H2.

It should be noted that the second threshold may be determined according to an actual need, which is not limited therein.

Therefore, for the image to be processed with the height smaller than the width, the third area to be cropped is determined by sliding the preset rectangle horizontally in the image to be processed. In the case that the portrait area is located in a preset area of the third area to be cropped, the third area to be cropped is cropped, so that the portrait is located in a preset area of the target background image, which may improve the visual impression.

Exemplarily, for the image to be processed with the height smaller than the width, taking the preset rectangle as a square as an example, a point at an upper left corner of the image to be processed may be used as an origin. A rectangular coordinate system is established with a positive direction of an x-axis pointing rightwards and a positive direction of a y-axis pointing downwards. A position of a center point of the portrait is determined. An initial position and a moving direction of the square are determined based on the position of the center point of the portrait. A range of a moving length is determined based on a horizontal coordinate of a left edge of the portrait or a horizontal coordinate of a right edge of the portrait, and a side length of the square. The third area to be cropped is obtained by moving, based on the range of the moving length, the square from the initial position along the moving direction. If the portrait area is located in the preset area of the third area to be cropped, the target background image may be obtained by cropping the third area to be cropped. Therefore, the area to be cropped that meets the requirement is determined based on the range of the moving length, and the cropping efficiency may be improved.

For example, the square may be moved from the initial position along the moving direction by moving a length to be moved, in which the length to be moved is within the range of moving length. An area to be cropped that meets the requirement may be obtained by differentially adjusting the length to be moved to move the square from the initial position along the moving direction.

Exemplarily, if the center point of the portrait is located in a right area of the image to be processed, a right edge of the square may be overlapped with a right edge of the portrait, which is determined as the initial position of the square. Since the portrait area is to be located within the square, it may be determined that the moving direction of the square is rightward, and the range of the moving length may be determined based on the horizontal coordinate of the right edge of the portrait, the side length of the square, the width of the image to be processed, and the like. The third area to be cropped that meets the requirement is obtained by moving the square to the right from the initial position based on the range of the moving length.

For example, a minimum moving length may be determined based on the horizontal coordinate of the right edge of the portrait and the side length of the square. A maximum moving length may be determined based on the horizontal coordinate of the right edge of the portrait and the width of the image to be processed. Then the range of the moving length is greater than or equal to the minimum moving length and smaller than or equal to the maximum moving length.

Exemplarily, if the center point of the portrait is located in a left area or a center of the image to be processed, a left edge of the square may be overlapped with a left edge of the portrait, which is determined as the initial position of the square. Since the portrait area is to be located within the square, it may be determined that the moving direction of the square is leftward, and the range of the moving length may be determined based on a horizontal coordinate of the left edge of the portrait, the side length of the square, the width of the image to be processed, and the like. The third area to be cropped that meets the requirement is obtained by moving the square to the left from the initial position based on the range of the moving length.

For example, a maximum moving length may be determined based on the horizontal coordinate of the left edge of the portrait. A minimum moving length may be determined based on the horizontal coordinate of the left edge of the portrait, the side length of the square and the width of the image to be processed. Then the range of the moving length is greater than or equal to the minimum moving length and smaller than or equal to the maximum moving length.

Exemplarily, for the image to be processed with the height smaller than the width, if the width of the portrait area is greater than the height of the image to be processed, it may be determined that a generation of the target image is failed. Further, prompt information for a failure of the generation of the target image may be returned, and the prompt information includes a reason for the failure of the generation.

At step 406, a portrait is obtained by performing portrait matting on the image to be processed and an enlarged portrait is obtained by enlarging the portrait.

In the invention, the step 406 may be realized in any implementation of the embodiments of the invention, which is not be repeated herein.

Optionally, if the width of the image to be processed is smaller than the height, and the target background image obtained by cropping in the top-to-bottom order does not include all of the portrait area, in order to ensure that the finally generated image has a portrait breaking effect, a cropped portrait may be obtained by cropping the portrait based on the portrait area included in the target background image, and the enlarged portrait may be obtained by enlarging the cropped portrait.

Exemplarily, the cropped portrait is the same as the portrait included in the target background image.

At step 407, a target image is generated based on the target background image and the enlarged portrait.

In the invention, the step 407 may be realized in any implementation of the embodiments of the invention, which is not be repeated herein.

For example, the FIG. 2 is taken as the image to be processed, and a width of the FIG. 2 is smaller than a height of the FIG. 2. The image to be processed is cropped using a square with a side length the same as the width of the image to be processed. A first area to be cropped is determined in the FIG. 2 in a bottom-to-top order. If the first area to be cropped includes a complete portrait area, the target background image is obtained by cropping the first area to be cropped. A nine-grid effect image is obtained by adding two equally spaced transparent lines horizontally and vertically to the target background image. The image shown in FIG. 3 is obtained by pasting the nine-grid effect image in a white background image with a preset width-to-height ratio and pasting the enlarged portrait along a bottom edge of the portrait in the nine-grid effect image (pasting the enlarged portrait in the nine-grid effect image with a bottom edge of the enlarged portrait aligned with a bottom edge of the portrait in the nine-grid effect image).

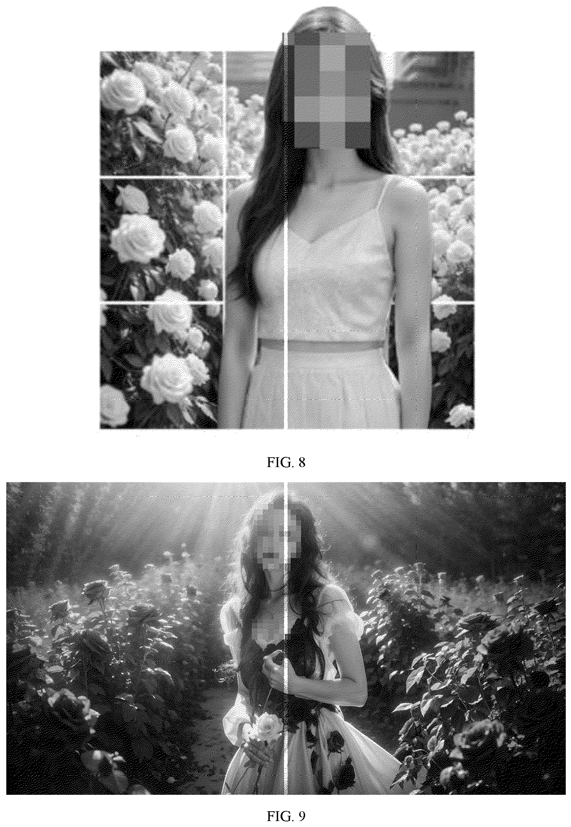

For example, FIG. 7 is taken as the image to be processed, and a width of the FIG. 7 is smaller than a height of the FIG. 7. The FIG. 7 is cropped using a square with a side length the same as the width of the image to be processed. A first area to be cropped is determined in the FIG. 7 in a bottom-to-top order. If the first area to be cropped does not include a complete portrait area, a second area to be cropped is determined in a top-to-bottom order. A proportion of a portrait area included in the second area to be cropped in an entire portrait area is greater than a first threshold of 60%. Then a target background image is obtained by cropping the second area to be cropped. Since the target background image does not include the complete portrait area, then a cropped portrait may be obtained by cropping the portrait in the target background image, and an enlarged portrait may be obtained by enlarging the cropped portrait. A nine-grid effect image is obtained by adding two equally spaced transparent lines horizontally and vertically to the target background image. The image shown in FIG. 8 is obtained by pasting the nine-grid effect image in a white background image with a preset width-to-height ratio and pasting the enlarged portrait along a bottom edge of the portrait in the nine-grid effect image.

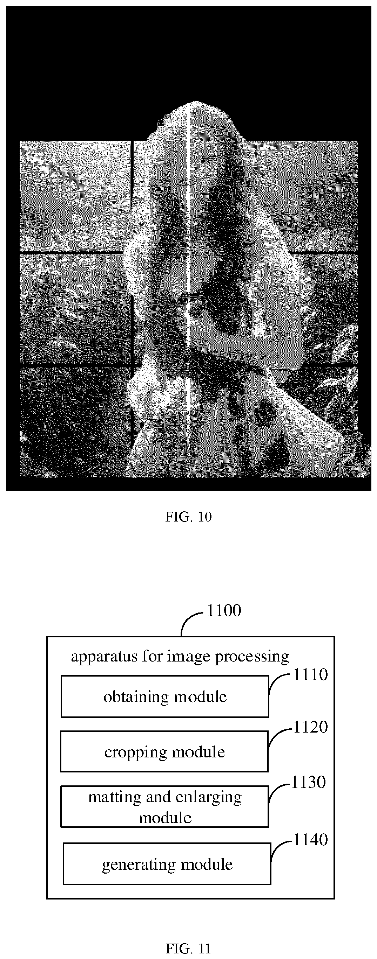

For example, FIG. 9 is taken as the image to be processed, and a height of the FIG. 9 is smaller than a width of the FIG. 9. A third area to be cropped is determined by sliding a square with a side length the same as the height of the FIG. 9 in the FIG. 9. When a portrait area is located within a left side of the third area to be cropped, the target background image is obtained by cropping the third area to be cropped. A nine-grid effect image is obtained by adding two equally spaced transparent lines horizontally and vertically to the target background image. An image shown in FIG. 10 is obtained by pasting the nine-grid effect image in a black background image with a preset width-to-height ratio and pasting an enlarged portrait along a bottom edge of a portrait in the nine-grid effect image.

In embodiments of the invention, the cropping strategy for the image to be processed is determined based on the size relationship between the width and the height in the size of the image to be processed, the target background image is obtained by cropping, based on the portrait area, the image to be processed using a corresponding cropping strategy. Therefore, for the vertical image and the horizontal image, target background images that meet the requirement may be obtained by cropping using different cropping strategies, so as to improve the portrait breaking effect of the target image obtained finally.

To facilitate understanding the method for image processing in the invention, the following is an example of obtaining a target background image by cropping using a square, and generating a nine-grid breaking image.

The process of image processing in the invention may include the following steps.
(1) Pre-selection of a photo(s) for production, i.e., selecting the photo(s) to be produced. Since some photos may not be suitable for making a portrait breaking image, a photo(s) used to generate the portrait breaking image with a stunning effect may simultaneously satisfy preset conditions, including: only one portrait in the photo, the portrait being not a full-body photograph, not a selfie, not a stitched picture, and the like. For the condition that only one portrait in the photo, face information in the photo may be recognized to determine that there is only one face in the photo, and photos with multiple faces are filtered. For the condition that the portrait in the photo is not a full-body photograph, the portrait may be determined whether or not it is attached to an edge based on a segmentation result of the portrait segmentation operator. If the portrait is not attached to an edge, the portrait may be determined as a full-body photograph, and the photo is filtered. Photos may have the photographing labels after being stored in a network disk, and a photo(s) having a selfie label is filtered out. In order to ensure that the portrait is broken smoothly, the photo should have a clear hierarchy of a background and a person. A background erasing operator and a portrait matting operator may be used to perform a difference operation on results. If a difference operation result is less than a threshold of 0.25, it indicates that the photo may produce a portrait breaking image with good effect, and a photo(s) that does not meet the requirement is filtered.
(2) Cropping using a square. A suitable square background is cropped from the photo, which may be configured to perform a segmentation of a nine-grid. A portrait area may be calculated first and whether an original image is a horizontal image (a width is greater than a height) or a vertical image (the height is greater than the width) is determined.

For a vertical image, a side length of the square may be defined with a width of the vertical image, and the vertical image is cropped in a bottom-to-top order first. If a cropped square does not completely include a portrait rectangle area, it is tried to crop the vertical image in a bottom-to-top order until a portrait area within a cropped square is greater than 60% of a complete portrait area. If the portrait area is less than 60% of the complete portrait area, cropping is failed, and therefore the nine-grid breaking image is failed to be generated.

For a horizontal image, a side length of the square may be defined with a height of the horizontal image. The square is slid within the horizontal image, and the portrait area is cropped to within a one-third range of a left side of the square or a one-third range of a right side of the square to ensure a better visual impression. Since a square is cropped from the horizontal image, a key to crop the square is to determine coordinates of an upper left corner of the square.

(3) Portrait matting and enlarging. A portrait may be matted by using a portrait cropping operator. A key for the portrait breaking image is that the portrait overflows the background. An overflow effect may be obtained by calculating a height of the portrait, enlarge the portrait to be higher than the cropped square. During the process of enlarging the portrait, the portrait should not overflow the photo in the width, otherwise a body in the portrait may be cropped. If left and right sides of the body overflow the edge of a square background after enlarging the portrait, it can be considered that a nine-grid breaking image is failed to be generated.

(4) Pasting the portrait. A nine-grid effect image is obtained by adding two equally spaced transparent lines horizontally and vertically to the cropped square. The nine-grid effect image is pasted on a background image with a width-to-height ratio of four to three. The portrait breaking image may be generated by pasting the enlarged portrait along a bottom edge of an original portrait in the square.

To implement the above embodiments, an apparatus for image processing is further provided in the invention. FIG. 11 is a block diagram illustrating an apparatus for image processing provided in an embodiment of the invention.

As shown in FIG. 11, the apparatus 1100 for image processing includes an obtaining module 1110, a cropping module 1120, a matting and enlarging module 1130 and a generating module 1140.

The obtaining module 1110 is configured to obtain an image to be processed.

The cropping module 1120 is configured to determine a portrait area in the image to be processed, and crop, based on the portrait area, a target background image from the image to be processed.

The matting and enlarging module 1130 is configured to obtain a portrait by performing portrait matting on the image to be processed and obtain an enlarged portrait by enlarging the portrait, in which a height of the enlarged portrait is greater than a height of the target background image; and
The generating module 1140 is configured to generate a target image based on the target background image and the enlarged portrait.

Optionally, the cropping module 1120 is configured to:
obtain a size of the image to be processed;
determine, based on a size relationship between a width and a height in the size of the image to be processed, a cropping strategy for the image to be processed; and
obtain the target background image by cropping, based on the portrait area, the image to be processed using the cropping strategy.

Optionally, the size relationship is that the width is smaller than the height, and the cropping module 1120 is configured to:
determine a first area to be cropped in the image to be processed in a bottom-to-top order, in which a width of the first area to be cropped is the same as a width of the image to be processed;
in response to the first area to be cropped including all of the portrait area, obtain the target background image by cropping the first area to be cropped;
in response to the first area to be cropped not including all of the portrait area, determine a second area to be cropped in the image to be processed in a top-to-bottom order; in which a width of the second area to be cropped is the same as the width of the image to be processed; and
in response to a proportion of a portrait area included in the second area to be cropped in the portrait area being greater than a first threshold, obtain the target background image by the second area to be cropped.

Optionally, the matting and enlarging module 1130 is configured to:
in response to the target background image not including all of the portrait area, obtain a cropped portrait by cropping the portrait based on a portrait area included in the target background image; and
obtain the enlarged portrait by enlarging the cropped portrait.

Optionally, the size relationship is that the height is smaller than the width, and the cropping module 1120 is configured to:
determine a third area to be cropped by sliding a preset rectangle horizontally in the image to be processed, in which the image to be processed includes the preset rectangle; and
in response to determining that the portrait area is located in a preset area of the third area to be cropped, obtain the target background image by cropping the third area to be cropped;
in which the preset area is a left area or a right area of the third area to be cropped and a proportion of the portrait area in the third area to be cropped is less than a second threshold.

Optionally, the preset rectangle is a square, and the cropping module 1120 is configured to:
determine a position of a center point of the portrait;
determine, based on the position of the center point of the portrait, an initial position and a moving direction of the square;
determine, based on a horizontal coordinate of a left edge of the portrait or a horizontal coordinate of a right edge of the portrait, and a side length of the square, a range of a moving length; and
obtain the third area to be cropped by moving, based on the range of the moving length, the square from the initial position along the moving direction, in which the portrait area is located in the preset area of the third area to be cropped.

Optionally, the generating module 1140 is configured to:
obtain a processed background image by adding a preset number of transparent lines horizontally and vertically to the target background image; and
generate the target image by pasting the processed background image in a background image with a preset width-to-height ratio and pasting the enlarged portrait along a bottom edge of the portrait in the processed background image.

Optionally, the obtaining module 1110 is configured to:
obtain a candidate image; and
in response to the candidate image satisfying a preset condition, determine the candidate image as the image to be processed;
in which the preset condition includes at least one of: a number of portraits included being a preset number, a portrait included being an area image of a partial human body, a photographing label being a preset label, or the candidate image being an original image.

Optionally, the obtaining module 1110 is configured to:
obtain a background erased portrait by performing background erasing on the candidate image;
obtain a matting portrait by performing the portrait matting on the candidate image;
determine a ratio of different pixel points to pixel points of the matting portrait by comparing the background erased portrait with the matting portrait; and
in response to the ratio being less than a third threshold, determine the candidate image as the image to be processed.

It should be noted that the illustration of the embodiments of the methods for image processing is also applicable to the apparatus for image processing of the embodiments, which is not be repeated herein.

In embodiments of the invention, a portrait area in an image to be processed is determined, a target background image is cropped from the image to be processed based on the portrait area, a portrait is obtained by performing portrait matting on the image to be processed and the portrait is enlarged. Since a height of an enlarged portrait is greater than a height of the target background image, a target image with a portrait breaking effect may be generated based on the target background image and the enlarged portrait. Therefore, the target background image may be automatically cropped based on the portrait area in the image to be processed, and the portrait breaking effect may be realized by enlarging the portrait, which improves the efficiency of the generation of the portrait breaking image.

According to embodiments of the invention, an electronic device, a readable storage medium, and a computer program product are also provided.

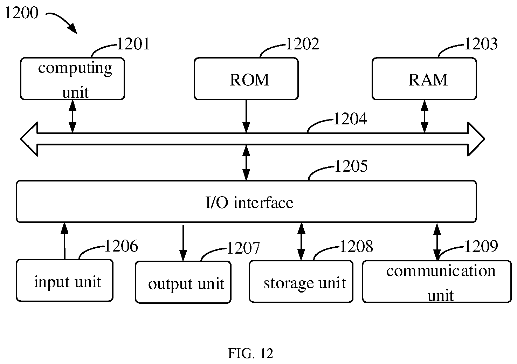

FIG. 12 is a block diagram of an electronic device 1200 used to implement embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 12, the electronic device 1200 includes a computing unit 1201 that can perform various appropriate actions and processes based on computer programs stored in ROM (Read Only Memory) 1202 or computer programs loaded from a storage unit 1208 into RAM (Random Access Memory) 1203. In RAM 1203, various programs and data required for the operation of the device 1200 can also be stored. The computing unit 1201, ROM 1202, and RAM 1203 are connected to each other through a bus 1204. The I/O (Input/Output) interface 1205 is also connected to the bus 1204.

Multiple components in device 1200 are connected to the I/O interface 1205, including input unit 1206 such as keyboard, mouse, and the like; output unit 1207, such as various types of displays, speakers, and the like; storage unit 1208, such as disks, CDs, and the like; and communication unit 1209, such as network card, modem, wireless communication transceiver, and the like. The communication unit 1209 allows device 1200 to exchange information/data with other devices through computer networks such as the Internet and/or various telecommunications networks.

The computing unit 1201 can be various general-purpose and/or specialized processing components with processing and computing capabilities. Some examples of computing unit 1201 include but are not limited to CPU (Central Processing Unit), GPU (Graphic Processing Units), various specialized AI (Artificial Intelligence) computing chips, various computing units that run machine learning model algorithms, DSP (Digital Signal Processor), and any suitable processor, controller, microcontroller, and the like. The computing unit 1201 executes various methods and processes described above, such as the method for image processing. For example, in some embodiments, the method for image processing may be implemented as a computer software program tangibly contained in a machine-readable medium, such as storage unit 1208. In some embodiments, some or all of the computer program may be loaded and/or installed onto the device 1200 via ROM 1202 and/or communication unit 1209. When the computer program is loaded into RAM 1203 and executed by the computing unit 1201, one or more steps of the method for image processing described above can be performed. Alternatively, in other embodiments, the computing unit 1201 may be configured to perform the method for image processing through any other suitable means (e.g., with the aid of firmware).

Various embodiments of the systems and technologies described herein may be implemented in digital electronic circuit systems, integrated circuit systems, Application Specific Integrated Circuits (ASICs), computer hardware, firmware, software, and/or combinations thereof. These various embodiments may be implemented in one or more computer programs, which may be executed and/or interpreted on a programmable system including at least one programmable processor. The programmable processor may be a dedicated or general purpose programmable processor that receives data and instructions from a storage system, at least one input device, and at least one output device, and transmits the data and instructions to the storage system, the at least one input device, and the at least one output device.

The program codes used to implement the method of the present invention can be written in any combination of one or more programming languages. These program codes can be provided to processors or controllers of general-purpose computers, specialized computers, or other programmable data processing devices, so that when executed by the processor or controller, the program codes implement the functions/operations specified in the flowchart and/or block diagram. The program codes can be executed entirely on a machine, partially on a machine, partially on a machine as a standalone software package and partially on a remote machine, or entirely on a remote machine or server.

In the context of this invention, a machine readable medium may be a tangible medium that contains or stores programs for use by or in combination with an instruction execution system, apparatus, or device. The machine readable medium can be machine readable signal medium or machine readable storage medium. The machine readable medium may include, but is not limited to, electronic, magnetic, optical, electromagnetic, infrared, or semiconductor systems, devices, or equipment, or any suitable combination of the above. More specific examples of machine-readable storage medium include electrical connections based on one or more wires, portable computer disks, hard drives, RAM, ROM, EPROM (Electrically Programmable Read Only Memory) or flash memory, fiber optics, CD-ROM (Compact Disc Read Only Memory), optical storage devices, magnetic storage devices, or any suitable combination of the above.

In order to provide interaction with a user, the systems and techniques described herein may be implemented on a computer having a display device (e.g., a Cathode Ray Tube (CRT) or an LCD monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, intermediate computing components, or front-end components. The components of the system may be interconnected by any form or medium of digital data communication (e.g., a communication network). Examples of communication networks include: a local area network (LAN), a wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and Virtual Private Server (VPS) service. The server can also be a server of a distributed system or a server combined with block-chain.

According to embodiments of the present invention, the invention further provides a computer program product. When the instructions in the computer program product are executed by the processor, the method for image processing proposed in the above embodiments of the present invention is implemented.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention. Those skilled in the art should understand that various modifications, combinations, sub-combinations and substitutions can be made according to design requirements and other factors. Any modification, equivalent replacement and improvement made within the principle of the invention shall be included in the protection scope of the invention.

## Claims

1. A method for image processing, comprising:
obtaining (101; 401) an image to be processed;
determining (102) a portrait area in the image to be processed, and cropping, based on the portrait area, a target background image from the image to be processed;
obtaining (103; 406) a portrait by performing portrait matting on the image to be processed and obtaining an enlarged portrait by enlarging the portrait, wherein a height of the enlarged portrait is greater than a height of the target background image; and
generating (104; 407), based on the target background image and the enlarged portrait, a target image.

2. The method according to claim 1, wherein cropping, based on the portrait area, the target background image from the image to be processed comprises:
obtaining (403) a size of the image to be processed;
determining (404), based on a size relationship between a width and a height in the size of the image to be processed, a cropping strategy for the image to be processed; and
obtaining (405) the target background image by cropping, based on the portrait area, the image to be processed with the cropping strategy.

3. The method according to claim 2, wherein the size relationship is that the width is smaller than the height, and obtaining the target background image by cropping, based on the portrait area, the image to be processed with the cropping strategy comprises:
determining a first area to be cropped in the image to be processed in a bottom-to-top order, wherein a width of the first area to be cropped is the same as a width of the image to be processed;
in response to the first area to be cropped comprising all of the portrait area, obtaining the target background image by cropping the first area to be cropped;
in response to the first area to be cropped not comprising all of the portrait area, determining a second area to be cropped in the image to be processed in a top-to-bottom order, wherein a width of the second area to be cropped is the same as the width of the image to be processed; and
in response to a proportion of a portrait area comprised in the second area to be cropped in the portrait area being greater than a first threshold, obtaining the target background image by copping the second area to be cropped.

4. The method according to claim 3, wherein obtaining the enlarged portrait by enlarging the portrait comprises:
in response to the target background image not comprising all of the portrait area, obtaining a cropped portrait by cropping, based on a portrait area comprised in the target background image, the portrait; and
obtaining the enlarged portrait by enlarging the cropped portrait.

5. The method according to claim 2, wherein the size relationship is that the height is smaller than the width, and obtaining the target background image by cropping, based on the portrait area, the image to be processed with the cropping strategy comprises:
determining a third area to be cropped by sliding a preset rectangle horizontally in the image to be processed, wherein the image to be processed comprises the preset rectangle; and
in response to determining that the portrait area is located in a preset area of the third area to be cropped, obtaining the target background image by cropping the third area to be cropped;
wherein the preset area is a left area or a right area of the third area to be cropped and a proportion of the portrait area in the third area to be cropped is less than a second threshold value.

6. The method according to claim 5, wherein the preset rectangle is a square, and determining that the portrait area is located in the preset area of the third area to be cropped comprises:
determining a position of a center point of the portrait;
determining, based on the position of the center point of the portrait, an initial position and a moving direction of the square;
determining, based on a horizontal coordinate of a left edge of the portrait or a horizontal coordinate of a right edge of the portrait, and a side length of the square, a range of a moving length; and
obtaining the third area to be cropped by moving, based on the range of the moving length, the square from the initial position along the moving direction, wherein the portrait area is located in the preset area of the third area to be cropped.

7. The method according to any one of claims 1 to 6, wherein generating (104; 407), based on the target background image and the enlarged portrait, the target image comprises:
obtaining a processed background image by adding a preset number of transparent lines horizontally and vertically to the target background image; and
generating the target image by pasting the processed background image in a background image with a preset width-to-height ratio and pasting the enlarged portrait along a bottom edge of the portrait in the processed background image.

8. The method according to any one of claims 1 to 6, wherein obtaining (101; 401) the image to be processed comprises:
obtaining a candidate image; and
in response to the candidate image satisfying a preset condition, determining the candidate image as the image to be processed;
wherein the preset condition comprises at least one of: a number of portraits comprised being a preset number, a portrait comprised being an area image of a partial human body, a photographing label being a preset label, or the candidate image being an original image.

9. The method according to claim 8, wherein determining the candidate image as the image to be processed comprises:
obtaining a background erased portrait by performing background erasing on the candidate image;
obtaining a matting portrait by performing the portrait matting on the candidate image;
determining a ratio of different pixel points to pixel points of the matting portrait by comparing the background erased portrait with the matting portrait; and
in response to the ratio being less than a third threshold, determining the candidate image as the image to be processed.

10. An apparatus (1100) for image processing, comprising:
an obtaining module (1110), configured to obtain an image to be processed;
a cropping module (1120), configured to determine a portrait area in the image to be processed, and crop, based on the portrait area, a target background image from the image to be processed;
a matting and enlarging module (1130), configured to obtain a portrait by performing portrait matting on the image to be processed and obtain an enlarged portrait by enlarging the portrait, wherein a height of the enlarged portrait is greater than a height of the target background image; and
a generating module (1140), configured to generate, based on the target background image and the enlarged portrait, a target image.

11. The apparatus (1100) according to claim 10, wherein the cropping module (1120) is configured to:
obtain a size of the image to be processed;
determine, based on a size relationship between a width and a height in the size of the image to be processed, a cropping strategy for the image to be processed; and
obtain the target background image by cropping, based on the portrait area, the image to be processed with the cropping strategy.

12. The apparatus (1100) according to claim 11, wherein the size relationship is that the width is smaller than the height, and the cropping module (1120) is configured to:
determine a first area to be cropped in the image to be processed in a bottom-to-top order, wherein a width of the first area to be cropped is the same as a width of the image to be processed;
in response to the first area to be cropped comprising all of the portrait area, obtain the target background image by cropping the first area to be cropped;
in response to the first area to be cropped not comprising all of the portrait area, determine a second area to be cropped in the image to be processed in a top-to-bottom order, wherein a width of the second area to be cropped is the same as the width of the image to be processed; and
in response to a proportion of a portrait area comprised in the second area to be cropped in the portrait area being greater than a first threshold, obtain the target background image by the second area to be cropped.

13. The apparatus (1100) according to claim 12, wherein the matting and enlarging module (1130) is configured to:
in response to the target background image not comprising all of the portrait area, obtain a cropped portrait by cropping, based on a portrait area comprised in the target background image, the portrait; and
obtain the enlarged portrait by enlarging the cropped portrait.

14. A non-transitory computer readable storage medium, storing computer instructions, wherein the computer instructions are caused a computer to perform the method according to any one of claims 1 to 9.

15. A computer program product, comprising a computer program wherein computer program, when executed by a processor, implements the method according to any one of claims 1 to 9.

## Patentansprüche

1. Ein Verfahren zur Bildverarbeitung, umfassend:
Erhalten (101; 401) eines zu verarbeitenden Bildes;
Bestimmen (102) eines Porträtbereichs in dem zu verarbeitenden Bild, und Beschneiden, auf der Grundlage des Porträtbereichs, eines Zielhintergrundbildes aus dem zu verarbeitenden Bild;
Erhalten (103; 406) eines Porträts durch Durchführen einer Porträtmattierung an dem zu verarbeitenden Bild und Erhalten eines vergrößerten Porträts durch Vergrößern des Porträts, wobei eine Höhe des vergrößerten Porträts größer ist als eine Höhe des Zielhintergrundbildes; und
Erzeugen (104; 407), auf der Grundlage des Zielhintergrundbildes und des vergrößerten Porträts, eines Zielbildes.

2. Das Verfahren nach Anspruch 1, wobei das Beschneiden, auf der Grundlage des Porträtbereichs, des Zielhintergrundbildes aus dem zu verarbeitenden Bild umfasst:
Erhalten (403) einer Größe des zu verarbeitenden Bildes;
Bestimmen (404), auf der Grundlage eines Größenverhältnisses zwischen einer Breite und einer Höhe in der Größe des zu verarbeitenden Bildes, einer Beschneidestrategie für das zu verarbeitende Bild; und
Erhalten (405) des Zielhintergrundbildes durch Beschneiden, auf der Grundlage des Portraitbereichs, des zu verarbeitenden Bildes mit der Beschneidestrategie.

3. Das Verfahren nach Anspruch 2, wobei das Größenverhältnis darin besteht, dass die Breite kleiner ist als die Höhe, und das Erhalten des Zielhintergrundbildes durch Beschneiden, auf der Grundlage des Portraitbereichs, des zu verarbeitenden Bildes mit der Beschneidestrategie umfasst:
Bestimmen eines ersten zu beschneidenden Bereichs in dem zu verarbeitenden Bild in einer Reihenfolge von unten nach oben, wobei eine Breite des ersten zu beschneidenden Bereichs gleich einer Breite des zu verarbeitenden Bildes ist;
in Reaktion darauf, dass der erste zu beschneidende Bereich den gesamten Portraitbereich umfasst, Erhalten des Zielhintergrundbildes durch Beschneiden des ersten zu beschneidenden Bereichs;
in Reaktion darauf, dass der erste zu beschneidende Bereich nicht den gesamten Portraitbereich umfasst, Bestimmen eines zweiten zu beschneidenden Bereichs in dem zu verarbeitenden Bild in einer Reihenfolge von oben nach unten, wobei eine Breite des zweiten zu beschneidenden Bereichs gleich der Breite des zu verarbeitenden Bildes ist; und
in Reaktion darauf, dass ein Anteil eines Porträtbereichs, der in dem zweiten zu beschneidenden Bereich in dem Porträtbereich enthalten ist, größer ist als ein erster Schwellenwert, Erhalten des Zielhintergrundbildes durch Beschneiden des zweiten zu beschneidenden Bereichs.

4. Das Verfahren nach Anspruch 3, wobei das Erhalten des vergrößerten Porträts durch Vergrößern des Porträts umfasst:
in Reaktion darauf, dass das Zielhintergrundbild nicht den gesamten Porträtbereich umfasst, Erhalten eines beschnittenen Porträts durch Beschneiden, auf der Grundlage eines in dem Zielhintergrundbild enthaltenen Porträtbereichs, des Porträts; und
Erhalten des vergrößerten Porträts durch Vergrößern des beschnittenen Porträts.

5. Das Verfahren nach Anspruch 2, wobei das Größenverhältnis darin besteht, dass die Höhe kleiner ist als die Breite, und das Erhalten des Zielhintergrundbildes durch Beschneiden, auf der Grundlage des Porträtbereichs, des zu verarbeitenden Bildes mit der Beschneidestrategie umfasst:
Bestimmen eines dritten zu beschneidenden Bereichs durch horizontales Verschieben eines voreingestellten Rechtecks in dem zu verarbeitenden Bild, wobei das zu verarbeitende Bild das voreingestellte Rechteck umfasst; und
in Reaktion auf das Bestimmen, dass sich der Porträtbereich in einem voreingestellten Bereich des dritten zu beschneidenden Bereichs befindet, Erhalten des Zielhintergrundbild durch Beschneiden des dritten zu beschneidenden Bereichs;
wobei der voreingestellte Bereich ein linker Bereich oder ein rechter Bereich des zu dritten zu beschneidenden Bereichs ist und ein Anteil des Portraitbereichs in dem dritten zu beschneidenden Bereich kleiner ist als ein zweiter Schwellenwert.

6. Das Verfahren nach Anspruch 5, wobei das voreingestellte Rechteck ein Quadrat ist, und das Bestimmen, dass sich der Porträtbereich in dem voreingestellten Bereich des dritten zu beschneidenden Bereichs befindet, umfasst:
Bestimmen einer Position eines Mittelpunkts des Porträts;
Bestimmen, auf der Grundlage der Position des Mittelpunkts des Porträts, einer Ausgangsposition und einer Bewegungsrichtung des Quadrats;
Bestimmen, auf der Grundlage einer horizontalen Koordinate einer linken Kante des Porträts oder einer horizontalen Koordinate einer rechten Kante des Porträts, und einer Seitenlänge des Quadrats, eines Bereichs einer Bewegungslänge; und
Erhalten des dritten zu beschneidenden Bereichs durch Bewegen, auf der Grundlage des Bereichs der Bewegungslänge, des Quadrats von der Ausgangsposition entlang der Bewegungsrichtung, wobei sich der Porträtbereich in dem voreingestellten Bereich des dritten zu beschneidenden Bereichs befindet.

7. Das Verfahren nach einem der Ansprüche 1 bis 6, wobei das Erzeugen (104; 407), auf der Grundlage des Zielhintergrundbildes und des vergrößerten Porträts, des Zielbildes umfasst:
Erhalten eines bearbeiteten Hintergrundbildes durch Hinzufügen einer voreingestellten Anzahl transparenter Linien horizontal und vertikal zu dem Zielhintergrundbild; und
Erzeugen des Zielbildes durch Einfügen des bearbeiteten Hintergrundbildes in ein Hintergrundbild mit einem voreingestellten Breiten-Höhen-Verhältnis und Einfügen des vergrößerten Porträts entlang einer Unterkante des Porträts in das bearbeitete Hintergrundbild.

8. Das Verfahren nach einem der Ansprüche 1 bis 6, wobei das Erhalten (101; 401) des zu verarbeitenden Bildes umfasst:
Erhalten eines Kandidatenbildes; und
in Reaktion darauf, dass das Kandidatenbild eine voreingestellte Bedingung erfüllt, Bestimmen des Kandidatenbild als das zu verarbeitende Bild;
wobei die voreingestellte Bedingung mindestens eines des Folgendem umfasst: eine Anzahl von enthaltenen Porträts, die einer voreingestellten Anzahl entspricht, ein enthaltenes Porträt, das ein Flächenbild eines partiellen menschlichen Körpers ist, ein photographisches Label, das ein voreingestelltes Label ist, oder das Kandidatenbild, das ein Originalbild ist.

9. Das Verfahren nach Anspruch 8, wobei das Bestimmen des Kandidatenbildes als das zu verarbeitende Bild umfasst:
Erhalten eines Porträts mit entferntem Hintergrund durch Durchführen einer Hintergrundentfernung an dem Kandidatenbild;
Erhalten eines mattierten Porträts durch Durchführen der Porträtmattierung an dem Kandidatenbild;
Bestimmen eines Verhältnisses von unterschiedlichen Pixelpunkten zu Pixelpunkten des mattierten Porträts durch Vergleichen des Porträts mit entferntem Hintergrund mit dem mattierten Porträt; und
in Reaktion darauf, dass das Verhältnis kleiner ist als ein dritter Schwellenwert, Bestimmen des Kandidatenbildes als das zu verarbeitende Bild.

10. Eine Vorrichtung (1100) zur Bildverarbeitung, umfassend:
ein Erhaltungsmodul (1110), das konfiguriert ist, ein zu verarbeitendes Bild zu erhalten;
ein Beschneidemodul (1120), das konfiguriert ist, einen Porträtbereich in dem zu verarbeitenden Bild zu bestimmen, und auf der Grundlage des Porträtbereichs ein Zielhintergrundbild aus dem zu verarbeitenden Bild zu beschneiden;
ein Mattierungs- und Vergrößerungsmodul (1130), das konfiguriert ist, ein Porträt durch Durchführen einer Porträtmattierung an dem zu verarbeitenden Bild zu erhalten und ein vergrößertes Porträt durch Vergrößern des Porträts zu erhalten, wobei eine Höhe des vergrößerten Porträts größer ist als eine Höhe des Zielhintergrundbildes; und
ein Erzeugungsmodul (1140), das konfiguriert ist, auf der Grundlage des Zielhintergrundbildes und des vergrößerten Porträts ein Zielbild zu erzeugen.

11. Die Vorrichtung (1100) nach Anspruch 10, wobei das Beschneidemodul (1120) konfiguriert ist, zum:
Erhalten einer Größe des zu verarbeitenden Bildes;
Bestimmen, auf der Grundlage eines Größenverhältnisses zwischen einer Breite und einer Höhe in der Größe des zu verarbeitenden Bildes, eine Beschneidestrategie für das zu verarbeitende Bild; und
Erhalten des Zielhintergrundbild durch Beschneiden, auf der Grundlage des Porträtbereichs, des zu verarbeitenden Bildes mit der Beschneidestrategie.

12. Die Vorrichtung (1100) nach Anspruch 11, wobei das Größenverhältnis darin besteht, dass die Breite kleiner ist als die Höhe, und das Beschneidemodul (1120) konfiguriert ist, zum:
Bestimmen eines ersten zu beschneidenden Bereich in dem zu verarbeitenden Bild in einer Reihenfolge von unten nach oben, wobei eine Breite des ersten zu beschneidenden Bereichs gleich einer Breite des zu verarbeitenden Bildes ist;
in Reaktion darauf, dass der erste zu beschneidende Bereich den gesamten Portraitbereich umfasst, Erhalten des Zielhintergrundbildes durch Beschneiden des ersten zu beschneidenden Bereichs;
in Reaktion darauf, dass der erste zu beschneidende Bereich nicht den gesamten Portraitbereich umfasst, Bestimmen eines zweiten zu beschneidenden Bereichs in dem zu verarbeitenden Bild in einer Reihenfolge von oben nach unten, wobei eine Breite des zweiten zu beschneidenden Bereichs gleich der Breite des zu verarbeitenden Bildes ist; und
in Reaktion darauf, dass ein Anteil eines Porträtbereichs, der in dem zweiten zu beschneidenden Bereich in dem Porträtbereich enthalten ist, größer ist als ein erster Schwellenwert, Erhalten des Zielhintergrundbildes durch den zweiten zu beschneidenden Bereich.

13. Die Vorrichtung (1100) nach Anspruch 12, wobei das Mattierungs- und Vergrößerungsmodul (1130) konfiguriert ist, zum:
in Reaktion darauf, dass das Zielhintergrundbild nicht den gesamten Porträtbereich umfasst, Erhalten eines beschnittenen Porträts durch Beschneiden, auf der Grundlage eines in dem Zielhintergrundbild enthaltenen Porträtbereichs, des Porträts; und
Erhalten des vergrößerten Porträts durch Vergrößern des beschnittenen Porträts.

14. Ein nicht-flüchtiges, computerlesbares Speichermedium, das Computerbefehle speichert, wobei die Computerbefehle einen Computer veranlassen, das Verfahren nach einem der Ansprüche 1 bis 9 durchzuführen.

15. Ein Computerprogrammprodukt, das ein Computerprogramm umfasst, wobei das Computerprogramm, wenn es von einem Prozessor ausgeführt wird, das Verfahren nach einem der Ansprüche 1 bis 9 implementiert.

## Revendications

1. Procédé de traitement d'image, comprenant :
l'obtention (101 ; 401) d'une image à traiter ;
la détermination (102) d'une zone de portrait dans l'image à traiter, et le recadrage, sur la base de la zone de portrait, d'une image de fond cible à partir de l'image à traiter ;
l'obtention (103 ; 406) d'un portrait en réalisant un détourage de portrait sur l'image à traiter et l'obtention d'un portrait agrandi en agrandissant le portrait, dans lequel une hauteur du portrait agrandi est supérieure à une hauteur de l'image de fond cible ; et
la génération (104 ; 407), sur la base de l'image de fond cible et du portrait agrandi, d'une image cible.

2. Procédé selon la revendication 1, dans lequel le recadrage, sur la base de la zone de portrait, de l'image de fond cible à partir de l'image à traiter comprend :
l'obtention (403) d'une taille de l'image à traiter ;
la détermination (404), sur la base d'une relation de taille entre une largeur et une hauteur pour la taille de l'image à traiter, d'une stratégie de recadrage pour l'image à traiter ; et
l'obtention (405) de l'image de fond cible en recadrant, sur la base de la zone de portrait, l'image à traiter selon la stratégie de recadrage.

3. Procédé selon la revendication 2, dans lequel la relation de taille veut que la largeur soit inférieure à la hauteur, et l'obtention de l'image de fond cible par recadrage, sur la base de la zone de portrait, de l'image à traiter selon la stratégie de recadrage comprend :
la détermination d'une première zone à recadrer dans l'image à traiter dans un ordre de bas en haut, dans lequel une largeur de la première zone à recadrer est la même qu'une largeur de l'image à traiter ;
en réponse à la première zone à recadrer comprenant toute la zone de portrait, l'obtention de l'image de fond cible en recadrant la première zone à recadrer ;
en réponse à la première zone à recadrer ne comprenant pas toute la zone de portrait, la détermination d'une deuxième zone à recadrer dans l'image à traiter dans un ordre de haut en bas, dans lequel une largeur de la deuxième zone à recadrer est la même que la largeur de l'image à traiter ; et
en réponse à une proportion d'une zone de portrait comprise dans la deuxième zone à recadrer dans la zone de portrait étant supérieure à un premier seuil, l'obtention de l'image de fond cible en recadrant la deuxième zone à recadrer.

4. Procédé selon la revendication 3, dans lequel l'obtention du portrait agrandi par agrandissement du portrait comprend :
en réponse à l'image de fond cible ne comprenant pas toute la zone de portrait, l'obtention d'un portrait recadré en recadrant, sur la base d'une zone de portrait comprise dans l'image de fond cible, le portrait ; et
l'obtention du portrait agrandi en agrandissant le portrait recadré.

5. Procédé selon la revendication 2, dans lequel la relation de taille veut que la hauteur soit inférieure à la largeur, et l'obtention de l'image de fond cible par recadrage, sur la base de la zone de portrait, de l'image à traiter selon la stratégie de recadrage comprend :
la détermination d'une troisième zone à recadrer en faisant glisser un rectangle prédéfini horizontalement dans l'image à traiter, dans lequel l'image à traiter comprend le rectangle prédéfini ; et
en réponse à la détermination que la zone de portrait est située dans une zone prédéfinie de la troisième zone à recadrer, l'obtention de l'image de fond cible en recadrant la troisième zone à recadrer ;
dans lequel la zone prédéfinie est une zone gauche ou une zone droite de la troisième zone à recadrer et une proportion de la zone de portrait dans la troisième zone à recadrer est inférieure à une seconde valeur seuil.

6. Procédé selon la revendication 5, dans lequel le rectangle prédéfini est un carré, et la détermination que la zone de portrait est située dans la zone prédéfinie de la troisième zone à recadrer comprend :
la détermination d'une position d'un point central du portrait ;
la détermination, sur la base de la position du point central du portrait, d'une position initiale et d'une direction de déplacement du carré ;
la détermination, sur la base d'une coordonnée horizontale d'un bord gauche du portrait ou d'une coordonnée horizontale d'un bord droit du portrait, et d'une longueur latérale du carré, d'une plage d'une longueur mobile ; et
l'obtention de la troisième zone à recadrer en déplaçant, sur la base de la plage de la longueur mobile, le carré à partir de la position initiale le long de la direction de déplacement, dans lequel la zone de portrait est située dans la zone prédéfinie de la troisième zone à recadrer.

7. Procédé selon l'une des revendications 1 à 6, dans lequel la génération (104 ; 407), sur la base de l'image de fond cible et du portrait agrandi, de l'image cible comprend :
l'obtention d'une image de fond traitée en ajoutant un nombre prédéfini de lignes transparentes horizontalement et verticalement à l'image de fond cible ; et
la génération de l'image cible en collant l'image de fond traitée dans une image de fond en suivant un rapport largeur/hauteur prédéfini et en collant le portrait agrandi le long d'un bord inférieur du portrait dans l'image de fond traitée.

8. Procédé selon l'une des revendications 1 à 6, dans lequel l'obtention (101 ; 401) de l'image à traiter comprend :
l'obtention d'une image candidate ; et
en réponse à l'image candidate satisfaisant à une condition prédéfinie, la détermination de l'image candidate en tant qu'image à traiter ;
dans lequel la condition prédéfinie comprend au moins l'un parmi : un nombre de portraits compris étant un nombre prédéfini, un portrait compris étant une image de zone d'un corps humain partiel, une étiquette de prise de vue étant une étiquette prédéfinie, ou l'image candidate étant une image d'origine.

9. Procédé selon la revendication 8, dans lequel la détermination de l'image candidate en tant qu'image à traiter comprend :
l'obtention d'un portrait à fond effacé en effectuant un effacement de fond sur l'image candidate ;
l'obtention d'un portrait détouré en réalisant le détourage de portrait sur l'image candidate ;
la détermination d'un rapport de différents points de pixels à des points de pixels du portrait détouré en comparant le portrait à fond effacé avec le portrait détouré ; et
en réponse au rapport étant inférieur à un troisième seuil, la détermination de l'image candidate en tant qu'image à traiter.

10. Appareil (1100) de traitement d'image, comprenant :
un module d'obtention (1110), configuré pour obtenir une image à traiter ;
un module de recadrage (1120), configuré pour déterminer une zone de portrait dans l'image à traiter, et recadrer, sur la base de la zone de portrait, une image de fond cible à partir de l'image à traiter ;
un module de détourage et d'agrandissement (1130), configuré pour obtenir un portrait en réalisant un détourage de portrait sur l'image à traiter et obtenir un portrait agrandi en agrandissant le portrait, dans lequel une hauteur du portrait agrandi est supérieure à une hauteur de l'image de fond cible ; et
un module de génération (1140), configuré pour générer, sur la base de l'image de fond cible et du portrait agrandi, une image cible.

11. Appareil (1100) selon la revendication 10, dans lequel le module de recadrage (1120) est configuré pour :
obtenir une taille de l'image à traiter ;
déterminer, sur la base d'une relation de taille entre une largeur et une hauteur pour la taille de l'image à traiter, une stratégie de recadrage pour l'image à traiter ; et
obtenir l'image de fond cible en recadrant, sur la base de la zone de portrait, l'image à traiter selon la stratégie de recadrage.

12. Appareil (1100) selon la revendication 11, dans lequel la relation de taille veut que la largeur soit inférieure à la hauteur, et le module de recadrage (1120) est configuré pour :
déterminer une première zone à recadrer dans l'image à traiter dans un ordre de bas en haut, dans lequel une largeur de la première zone à recadrer est la même qu'une largeur de l'image à traiter ;
en réponse à la première zone à recadrer comprenant toute la zone de portrait, obtenir l'image de fond cible en recadrant la première zone à recadrer ;
en réponse à la première zone à recadrer ne comprenant pas toute la zone de portrait, déterminer une deuxième zone à recadrer dans l'image à traiter dans un ordre de haut en bas, dans lequel une largeur de la deuxième zone à recadrer est la même que la largeur de l'image à traiter ; et
en réponse à une proportion d'une zone de portrait comprise dans la deuxième zone à recadrer dans la zone de portrait étant supérieure à un premier seuil, obtenir l'image de fond cible par la deuxième zone à recadrer.

13. Appareil (1100) selon la revendication 12, dans lequel le module de détourage et d'agrandissement (1130) est configuré pour :
en réponse à l'image de fond cible ne comprenant pas toute la zone de portrait, obtenir un portrait recadré en recadrant, sur la base d'une zone de portrait comprise dans l'image de fond cible, le portrait ; et
obtenir le portrait agrandi en agrandissant le portrait recadré.

14. Support de stockage non transitoire lisible par ordinateur stockant des instructions informatiques, dans lequel les instructions informatiques amènent un ordinateur à mettre en œuvre le procédé selon l'une des revendications 1 à 9.

15. Produit programme informatique comprenant un programme informatique dans lequel le programme informatique, lorsqu'il est exécuté par un processeur, met en œuvre le procédé selon l'une des revendications 1 à 9.
